Europäisches Patentamt

European Patent Office

Office européen des brevets

(11) Publication number: **0 520 581 B1**

## EUROPEAN PATENT SPECIFICATION

(45) Date of publication of patent specification: **13.09.95**

(51) Int. Cl.6: **A23C 9/142**, A23J 1/20, A23C 21/08, A23J 3/08

(21) Application number: **92201880.9**

(22) Date of filing: **24.06.92**

(54) **Method for the preparation of a product similar to low-fat milk.**

(30) Priority: **28.06.91 NL 9101127**

(43) Date of publication of application: **30.12.92 Bulletin 92/53**

(45) Publication of the grant of the patent: **13.09.95 Bulletin 95/37**

(84) Designated Contracting States: **BE DK FR GB NL**

(56) References cited:
**EP-A- 0 311 795**

**NETHERLANDS MILK AND DAIRY JOURNAL vol. 42, no. 2, 1988, WAGENINGEN, NL pages 155 - 172 DE WIT : 'Evaluation of Functional Properties of Whey Protein Concentrates and Whey Protein Isolates - 3. Functional Properties in Aqueous solution'**

**AUSTRALIAN JOURNAL OF DAIRY TECHNOLOGY vol. 39, no. 1, March 1984, HIGHETT VIC AU pages 44 - 47 J.A. DUNKERLEY : 'The Effect of Calcium and Cysteine Hydrochloride on the Firmness of Heat Coagula Formed from Cheddar Whey ProteinConcen-**

trates'

**JOURNAL OF DAIRY SCIENCE. vol. 60, no. 10, April 1977, CHAPAIGN, ILLINOIS USpages 1515 - 1518 J. HIDALGO : 'Solubility and Heat Stability of Whey Protein Concentrates'**

(73) Proprietor: **FRIESLAND (FRICO-DOMO) COOPERATIEVE B.A. Poolsterweg 1 NL-8938 AN Leeuwarden (NL)**

(72) Inventor: **Oudeman, Evert Platolaan 12 NL-9404 EN Assen (NL)**

(74) Representative: **Smulders, Theodorus A.H.J., Ir. et al Vereenigde Octrooibureaux Nieuwe Parklaan 97 NL-2587 BN 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to a method for preparing a product similar to low-fat milk by physical modification of a whey protein solution.

Whey and skim milk are two dairy liquids which are different in composition, colour, taste and physical properties. The amount of protein, drawn to the solids, is about 35% in low-fat milk. In whey, this percentage is approximately 12-15% but it can be raised by partially desalting and desugaring or ultrafiltering the whey. A consequence of partially desalting and desugaring the whey is that mainly lactose and minerals are removed and that whey proteins, non-protein nitrogen (NPN) are concentrated in the residual liquid (= mother liquor). During ultrafiltration only whey proteins are concentrated. Using both processes, it is possible to prepare a whey protein solution having a desired amount of protein, drawn to the solids. The composition of a whey protein solution so obtained can correspond to that of low-fat milk. On the basis of that protein composition, a whey protein solution has a higher nutritional score than low-fat milk when the Protein Efficiency Ratio (PER) is used as a standard. According to McDonough et al. J. of Dairy Sc. 59/1 (1975) pp. 34-40, low-fat milk has a PER of 2.51 compared with 2.75 for a whey protein concentrate (WPC) having 35% protein, drawn to the solids.

True, the composition of a WPC can be approximately equal to low-fat milk and nutritionally this solution may have a higher score, but the differences in colour, smell, taste and functional properties have an adverse effect on its applicability as a substitute for low-fat milk. McDonough saw good possibilities for WPC as a low-fat milk equivalent in the area of nutrition, but could not replace more than 40% of the low-fat milk from the point of view of taste.

From P. Saederup Nielsen, Marketing Bulletin, Pasilac, Danish Turnkey Dairy Ltd. (1987) it appears that for the preparation of ice-cream 25% of the low-fat milk could be replaced by a WPC without affecting smell, taste, structure and melting behaviour. WPC's in place of low-fat milk powder can also be used in fresh cheese, cheese curd and cream cheese for improving consistency (W.H. Modler, L.M. Poste, G. Butler, J. of Dairy Sc. 68 No. 11 (1985) page 2835 ff.).

European Patent No. 184267 discloses a use of WPC as a low-fat milk equivalent in the preparation of yoghurt, whereby 25% of the low-fat milk was replaced. When the 25% WPC was heated in its entirety at the conventional temperatures of 92 °C, a deviant yoghurt structure was obtained.

It has now been found that a product similar to low-fat milk can be prepared, without the above-mentioned disadvantages and yet enabling excellent applications, on the basis of physical modification of a whey protein solution by adding calcium ions to a whey protein concentrate having a whey protein content of 25-50%, drawn to the solids, and a pH value of 5.9-6.7, subsequently subjecting the concentrate to a heat treatment and homogenizing it, optionally followed by evaporating and drying the product.

Preferably, the whey protein concentrate is prepared by subjecting whey to an ultrafiltration treatment.

According to another preferred embodiment, the starting material is a whey protein concentrate which has been prepared by partially desalting and desugaring whey. Preferably, the pH value is 6.3-6.6. The amount of calcium ions added, drawn to the protein content, is 0.3-3.5%, and 1.5% in a preferred embodiment.

Although in principle all Ca salts are satisfactory, the use of Ca lactate is preferred. In the method according to the invention, the concentrate is heated to a temperature of 75-95 °C for a period of 10 sec to 7 min.

Preferably, for denaturing the proteins a temperature/time combination of 85 °C/ for 3 min is used. The homogenization treatment is carried out at a homogenization pressure of $(50-600) \times 10^5$ Pa (50-600 bar). Preferably, a pressure of $(150-300) \times 10^5$ Pa (150-300 bar) is used.

As a raw material for the whey protein concentrate, fresh sweet whey is used.

The concentrate is prepared by means of ultrafiltration or the partial desalting and desugaring of the whey to the desired solids content. This concentrate can then be dried. If the whey is ultrafiltered to a factor of 5 and then a powder is prepared through drying, the composition is as follows:

Table 1

| The composition of WPC-35 | |
|---|---|
| moisture | 3.9% |
| lactose | 52.3% |
| whey proteins (total) | 32.4% |
| NPN | 3.8% |
| ash | 6.5% |
| calcium | 0.67% |
| pH 10% solution | 6.53 |

The composition virtually corresponds to that of low-fat milk powder.

To carry out the physical modification of the whey protein solution, the powder is dissolved in cold water using a magnet or propeller agitator until a solution of a desired solids content has been obtained. The pH is adjusted with citric acid (50%) or sodium hydroxide (1 N) to values between 5.9 and 6.7. The calcium is added in the form of Ca ions. After dissolving for 1-2 h, the solution can be heated.

The physical modification means that as a result of the heating of the whey proteins, they unfold and subsequently aggregate. The amount of aggregates and the size thereof determine whether a solution is obtained which exhibits a similarity to low-fat milk.

Of the whey proteins, $\beta$-lactoglobulin is quantitatively the most important. This protein denatures at temperatures above 70°C. The physicochemical properties are influenced by the Ca salts in the same manner. Organoleptically, the products to which Ca lactate has been added are judged to be better. By using lactate, the taste becomes clearly less salt.

The method according to the invention will be further elucidated in and by the following examples.

Example 1

The powder from Table 1 was dissolved in water of 12°C to a solids content of 10.3%. 1.5% Ca calculated on the protein in the form of calcium lactate was added and the pH was adjusted to a value of 6.5 using a sodium hydroxide (IN). The solution (280 liter) was heated at 85°C for 3 min in a Stork Sterideal. After heating, the liquid was cooled in the downstream regenerative component to 45°C, whereafter the liquid was subjected to one-step homogenization at 280 bar. Then the liquid was cooled to 5°C.

Table 2

| Some properties of the liquid obtained | | | | |
|---|---|---|---|---|
| | | Unheated | Heated | Low-fat milk |
| heating temperature (°C) | | - | 85 | - |
| pH | | 6.5 | 6.5 | 6.7 |
| pH after heating | | - | 6.4 | - |
| Ca addition (%) (calculated on the protein) | | 1.5 | 1.5 | - |
| colour | L | 58.7 | 83.7 | 80.0 |
| | a | -4.6 | -2.3 | -2.6 |
| | b | 12.2 | 12.5 | 8.6 |
| transmission (%) | | 100.0 | 22.0 | 18.8 |
| viscosity (mPa.s) | | 1.9 | 1.9 | 1.8 |
| p.s.d. | median (μm) | not determined | 1.2 | - |
| | span | not determined | 1.2 | - |
| insolubility index (ml) | | - | 0.05 | - |

The colour of the solutions was determined using the Hunterlab D-25 tristimulus meter. In this measurement, the colour coordinates L, a and b were measured, the L value providing information on the extent of light reflection between 0 (black) and 100 (white), the a-value on the colour differentiation between red (positive) and green (negative) and the b-value on the colour differentiation between yellow (positive) and blue (negative).

The viscosity of the solutions was measured at 25°C using the Haake Rotovisco RV 20, measuring system ZA 30 at a shearing rate of 300 $S^{-1}$.

A particle size distribution was determined using the Malvern Particle Size Analyzer 2600 D. The lens used had a focal distance of 63 mm, the measuring cuvette had a volume of 17 ml and an optical path of 14.3 mm. The insolubility index was determined by centrifuging 50 ml solution for 5 minutes at 160 g, siphoning off 40 ml, redispersing the remaining 10 ml in 40 ml water and centrifuging for 5 min again, whereafter the amount of sediment in ml was read.

The transmission was measured in a cuvette with an optical path of 0.2 mm and a wavelength of 600 mm.

The liquid was evaporated to 45% solids, using a 4-stage Holvrieka evaporator. The preheating at evaporation was carried out at 74°C for 10 seconds. During evaporation, at temperatures between 45 and 70°C, no further aggregation of protein occurred. The median of the particle size distribution remained 1.2 μm.

The whey protein concentrate was buffered, whereafter it was dried with a one-phase drier. The conditions during drying were as follows:

Table 3

| Input air temperature | 180°C |
|---|---|
| Output air temperature | 102°C |
| Temperature of concentrate | 50°C |
| Flow rate of drying air | 1080 kg/h |
| Set-up of drier | low, wheel-spraying |
| Speed of wheel | 14,000 rpm |

4

Some properties of the powder obtained are specified in Table 4.

## Table 4

| | |
|---|---|
| Moisture content according to K. Fischer (%) | 3.7 |
| Bulk weight (g/ml) | 0.57 |
| Crushed weight 1250 * crush (g/ml) | 0.67 |
| Insolubility index (ml) | 0.05 |
| Particle density (g/ml) of the powder | 1.01 |
| Particle size distribution of the powder | |
| median ($\mu$m) | 62.2 |
| span | 1.4 |
| Particle size distribution of the powder after dissolution | |
| median ($\mu$m) | 1.2 |
| span | 1.1 |

The product prepared had properties so similar to those of low-fat milk powder that it could serve as a partial or full substitute for low-fat milk powder in all conventional applications in the foodstuffs industry.

Moreover, it appeared that the product could serve as a substitute for fats. The product exhibited excellent functional and nutritional properties and it appeared it could be used in numerous products, such as cheese, dairy products, frozen desserts, chocolate, sugar products, baby food and diet food, meat and meat products, etc., without evidence of any adverse influences in respect of colour, smell, taste and functional properties. Because the protein particles have a size which, insofar as this can be measured with the current configuration of the Malvern PSA 2600 D, corresponds with that of milk fat globules, the protein particles can also be used as substitutes for fat.

### Example 2

Whey was subjected to a partial desalting and desugaring treatment, which is known per se, in such a manner that a whey protein concentrate was obtained having a protein content of 45%, drawn to the solids. To this concentrate 1.1% Ca calculated on the protein was added in the form of Ca lactate. Then the concentrate was heated at 85°C for 5 min. The physically modified whey protein concentrate obtained had the following properties.

5

Table 5

| | | | Unheated | Heated | Low-fat milk |
|---|---|---|---|---|---|
| temperature (°C) | | | - | 85 | - |
| pH | | | 6.3 | 6.3 | - |
| pH after heating | | | - | 6.4 | - |
| Ca addition (%) (calculated on the protein) | | | - | 1.1 | - |
| colour | | L | 55.0 | 73.8 | 80.0 |
| | | a | -6.2 | -1.9 | -2.6 |
| | | b | 11.9 | 12.9 | 8.6 |
| transmission (%) | | | 100 | 8.3 | 18.8 |
| viscosity (mPa.s) | | | 2.4 | 2.5 | 1.8 |

**Claims**

1. A method for preparing a product similar to low-fat milk by physical modification of a whey protein solution, characterized in that calcium ions are added to a whey protein concentrate having a protein content of 25-50%, drawn to the solids, and a pH value of 5.9-6.7, the concentrate is subsequently subjected to a heat treatment and homogenized, whereafter the product is optionally evaporated and dried.

2. A method according to claim 1, characterized in that the whey protein concentrate is obtained by means of an ultrafiltration treatment.

3. A method according to claim 1, characterized in that the whey protein concentrate is obtained by partially desalting and desugaring whey.

4. A method according to claims 1-3, characterized in that the protein content of the whey protein concentrate is 35%.

5. A method according to claims 1-4, characterized in that the pH value is 6.3-6.6.

6. A method according to claims 1-5, characterized in that the amount of added calcium ions is 0.3-3.5%, drawn to the protein content.

7. A method according to claims 1-6, characterized in that the amount of added calcium ions is 1.5%, drawn to the protein content.

8. A method according to claims 1-7, characterized in that the calcium ions are added in the form of Ca lactate.

9. A method according to claims 1-8, characterized in that the concentrate is heated for a period of 10 seconds to 7 minutes at a temperature of 75 to 95°C.

10. A method according to claims 1-9, characterized in that the concentrate is heated for 3 minutes at a temperature of 85°C.

11. A method according to claims 1-10, characterized in that the homogenization treatment is carried out at a homogenization pressure of (50-600) x $10^5$ Pa (50-600 bar).

12. A method according to claims 1-11, characterized in that the homogenization treatment is carried out at a homogenization pressure of (150-300) x $10^5$ Pa (150-300 bar).

**Patentansprüche**

1. Ein Verfahren zur Herstellung von fettarmem Milchersatz durch die physikalische Modifizierung einer Molkenproteinlösung, wobei Kalziumionen einem Proteinkonzentrat mit einem Proteingehalt von 25 bis 30 % hinzugefügt werden, an die Feststoffe gezogen werden, mit einem pH-Wert von 5,9 bis 6,7; das Konzentrat wird anschließend warmebehandelt und homogenisiert; optional wird das Produkt anschließend eingedampft und getrocknet.

2. Ein Verfahren gemäß Anspruch 1, wobei das Molkenproteinkonzentrat durch eine Ultrafiltrationsbehandlung gewonnen wird.

3. Ein Verfahren gamäß Anspruch 1, wobei das Molkenproteinkonzentrat durch die teilweise Entsalzung und Entzuckerung von Molke gewonnen wird.

4. Ein Verfahren gemäß Ansprüche 1 bis 3, wobei der Proteingehalt des Molkenproteinkonzentrats 35 % beträgt.

5. Ein Verfahren gemäß Ansprüche 1 bis 4, wobei der pH-Wert 6,3 bis 6,6 beträgt.

6. Ein Verfahren gemäß Ansprüche 1 bis 5, wobei der Gehalt hinzugefügter Kalziuminonen 0,3 bis 3,5 % beträgt, an den Feststoffgehalt gezogen.

7. Ein Verfahren gemäß Ansprüche 1 bis 6, wobei der Gehalt hinzugefügter Kalziuminonen 1,5%, beträgt, an den Feststoffgehalt gezogen.

8. Ein Verfahren gemäß Ansprüche 1 bis 7, wobei die Kalziuminonen in Form von Ca-Laktat hinzugefügt werden.

9. Ein Verfahren gemäß Ansprüche 1 bis 8, wobei das Konzentrat für eine Dauer von 10 Sekunden bis 7 Minuten auf eine Temperatur von 75 °C bis 95 °C erhitzt wird.

10. Ein Verfahren gemäß Ansprüche 1 bis 9, wobei das Konzentrat für die Dauer von drei Minuten auf eine Temperatur von 85 °C erhitzt wird.

11. Ein Verfahren gemäß Ansprüche 1 bis 10, wobei die Homogenisierung bei einem Homogenisierdruck von $(50 - 600) \times 10^5$ Pa (50 - 600) durchgeführt wird.

12. Ein Verfahren gemäß Ansprüche 1 bis 11, wobei die Homogenisierung bei einem Homogenisierdruck von $(150 - 300) \times 10^5$ Pa (150 - 300) durchgeführt wird.

**Revendications**

1. Procédé de préparation d'un produit similaire au lait écrémé par modification physique d'une solution de protéine de petit lait, caractérisé en ce que les ions calcium sont ajoutés à un concentré de protéine de petit lait possédant une teneur en protéines de 25 à 50 % par rapport aux matières solides et un pH de 5,9 à 6,7, le concentré étant ensuite soumis à un traitement thermique et homogénéisé, après quoi le produit est éventuellement évaporé et déshydraté.

2. Procédé selon la revendication 1, caractérisé en ce que le concentré de protéine de petit lait est obtenu au moyen d'un traitement par ultrafiltration.

3. Procédé selon la revendication 1, caractérisé en ce que le concentré de protéine de petit lait est obtenu en déminéralisant partiellement et en extrayant le sucre du petit lait.

4. Procédé selon l'une des revendications 1 à 3, caractérisé en ce que la teneur en protéines du concentré de protéine de petit lait est de 35 %.

5. Procédé selon l'une des revendications 1 à 4, caractérisé en ce que le pH est de 6,3 à 6,6.

6. Procédé selon l'une des revendications 1 à 5, caractérisé en ce que la quantité d'ions calcium ajoutés est de 0,3 à 3,5 %, par rapport au taux de protéines.

7. Procédé selon l'une des revendications 1 à 6, caractérisé en ce que la quantité d'ions calcium ajoutés est de 1,5 % par rapport au raux de protéines.

8. Procédé selon l'une des revendications 1 à 7, caractérisé en ce que les ions calcium sont ajoutés sous la forme de lactate de calcium.

9. Procédé selon l'une des revendications 1 à 8, caractérisé en ce que le concentré est chauffé pendant une période de 10 secondes à 7 minutes à une température de 75 à 95°C.

10. Procédé selon l'une des revendications 1 à 9, caractérisé en ce que le concentré est chauffé pendant 3 minutes à une température de 85°C.

11. Procédé selon l'une des revendications 1 à 10, caractérisé en ce que le traitement d'homogénéisation se déroule à une pression d'homogénéisation de $(50\text{-}600) \times 10^5$ Pa.

12. Procédé selon l'une des revendications 1 à 11, caractérisé en ce que le traitement d'homogénéisation se déroule à une pression d'homogénéisation de $(150\text{-}300) \times 10^5$ Pa.